# EUROPÄISCHE PATENTSCHRIFT

(11) **EP 2 743 214 B1**
(45) Veröffentlichungstag und Bekanntmachung des Hinweises auf die Patenterteilung: **22.07.2015**
(21) Anmeldenummer: 13193119.8
(22) Anmeldetag: 15.11.2013
(51) Int. Cl.: B65G 1/04, A01J 25/16

(54) **Belade- bzw. Entladevorrichtung sowie Verschiebe- und Hebeapparat zum Be- bzw. Entladen von Regalen**
Loading or unloading device and moving and lifting apparatus for loading or unloading shelves
Dispositif de chargement ou de déchargement et appareil de déplacement et de levage pour le chargement ou le déchargement d'étagères

(30) Priorität: 14.12.2012 DE 102012112319
(43) Veröffentlichungstag der Anmeldung: 18.06.2014
(73) Patentinhaber: Leu Anlagenbau AG, 3661 Uetendorf (CH)
(72) Erfinder: Zenger, Thomas, 3632 Niederstocken (CH); Blättler, Beat, 3661 Uetendorf (CH)
(74) Vertreter: Witte, Weller & Partner Patentanwälte mbB

(56) Entgegenhaltungen:
- DE-A1-102008 016 881

## Beschreibung

Die Erfindung betrifft eine Belade- bzw. Entladevorrichtung zum Be- bzw. Entladen von Lebensmitteln für einen Verschiebe- und Hebeapparat, mit einer ersten Aufnahmevorrichtung, um Regale, die Trägerelemente zum Ablegen von Ladegut aufweisen, mit Ladegut zu beladen bzw. das Ladegut von den Regalen zu entladen, gemäß dem Oberbegriff von Anspruch 1.

Ferner betrifft die Erfindung einen Verschiebe- und Hebeapparat zum Be- bzw. Entladen von Regalen mit Ladegut, der dazu geeignet ist, sich zumindest zwischen den Regalen in Regalgängen zu bewegen, mit einer Belade- bzw. Entladevorrichtung der vorstehend genannten Art.

Eine solche Belade- bzw. Entladevorrichtung und ein solcher Verschiebe- und Hebeapparat sind aus dem Dokument DE 10 2008 016 881 bekannt. In jenem Dokument ist eine Vorrichtung als Handhabungseinheit an Regalbedienungsgeräten zur Bewegung in Regalgassen mit wenigstens einem Paar von Aufnahmegabeln für Paletten auf beiden Seiten der Regalgasse offenbart, die mit einer zusätzlichen Einrichtung versehen werden kann, die Funktionen ausführen kann, die über das Entnehmen bzw. Einbringen von Paletten hinausgeht. Dazu ist neben den beidseitig teleskopierbaren Aufnahmegabeln in einem Vorrichtungsrahmen ein weiteres Greifelement an einer in dem Vorrichtungsrahmen bewegbaren Plattform vorgesehen.

In WO 2009/098573 A1 ist eine Belade- bzw. Entladevorrichtung beschrieben, die eine feste Platte zum Tragen bzw. Verschieben von Ladegut aufweist. Ferner weist die Belade- bzw. Entladevorrichtung zumindest ein Paar Teleskoparme auf, die mit der festen Platte in Verbindung stehen, um die Platte entlang der Verfahrrichtung der Teleskoparme zu bewegen.

Bei der bekannten Belade- bzw. Entladevorrichtung ist die feste Platte der Belade- bzw. Entladevorrichtung lediglich dazu geeignet, die Trägerelemente des Regals mit Ladegut zu beladen bzw. das Ladegut von den Trägerelementen zu entladen.

Ferner offenbart Dokument EP 1 941 794 A1 eine Vorrichtung zum Be- bzw. Entladen von Regalen. Die Vorrichtung dient als Käsepflegeroboter. Der Käsepflegeroboter ist dazu geeignet, sich zwischen den Regalen zu bewegen und das Ladegut in Form von Käselaiben von den Regalen zu entnehmen bzw. auf diese zu überführen.

Die erfindungsgemäße Belade- und Entladevorrichtung kann wie die vorstehend genannte bekannte Vorrichtung ohne Beschränkung der Allgemeinheit insbesondere zum Beladen und Entladen von Käselaiben in bzw. aus Regalen verwendet werden. Während des Reifeprozesses von Käse müssen die Käselaibe regelmäßig gepflegt werden. Dazu werden die Käselaibe aus den Regalen geholt, gepflegt und anschließend wieder in die Regale verbracht.

Die Trägerelemente, beispielsweise Bretter, auf denen die Käselaibe in den Regalen lagern, werden beispielsweise nach Beendigung der Reifung der Käselaibe und Entfernung der Käselaibe aus den Regalen entnommen, um sie zu reinigen oder um beschädigte oder durch Abnutzung unbrauchbar gewordenen Trägerelemente auszusortieren und durch neue Trägerelemente zu ersetzen. Die gereinigten bzw. neuen Trägerlemente werden dann wieder in die Regale eingelegt.

Das Entnehmen und Einlegen der Trägerelemente wird herkömmlich durch das dafür verantwortliche Personal von Hand durchgeführt. Das Wechseln der Trägerelemente von Hand, insbesondere in einem Hochregallager mit einer Regalhöhe von bis zu sechs Metern, ist nicht nur umständlich und zeitaufwändig, sondern kann auch mit Gefahren für das Personal verbunden sein, da es bei einem Abrutschen der Bretter bzw. der Personen beim Wechseln der Bretter zu Verletzungen kommen kann.

Der Erfindung liegt daher die Aufgabe zugrunde, eine Belade- bzw. Entladevorrichtung der eingangs genannten Art dahingehend weiterzubilden, dass das Entnehmen und Einlegen der Trägerelemente weniger umständlich, weniger zeitaufwändig und mit geringeren Gefahren für das Personal durchgeführt werden kann, wobei die Belade- bzw. Entladevorrichtung dabei kostengünstig herstellbar sein soll.

Erfindungsgemäß wird diese Aufgabe hinsichtlich der eingangs genannten Belade- bzw. Entladevorrichtung dadurch gelöst, dass die erste Aufnahmevorrichtung entlang der Verfahrrichtung ein- und ausfahrbar ist, und dass der Antrieb für das Auflageelement durch die Verbindung der zweiten Aufnahmevorrichtung mit der ersten Aufnahmevorrichtung realisiert ist.

Während die aus WO 2009/098573 A1 und EP 1 941 794 A1 bekannten Belade- bzw. Entladevorrichtungen in ihrer Funktionalität auf das Be- bzw. Entladen des sich auf den Trägerelementen befindenden Ladeguts beschränkt sind, weist die erfindungsgemäße Belade- bzw. Entladevorrichtung eine zusätzliche Funktionalität auf, indem die Belade- bzw. Entladevorrichtung eine zweite Aufnahmevorrichtung zum Entnehmen und Einlegen der Trägerelemente, insbesondere in Form von Regalbrettern, aus den Regalen bzw. in die Regale aufweist. Die Trägerelemente können mit der erfindungsgemäßen Vorrichtung zumindest teilautomatisiert und somit mit geringerem Handhabungsaufwand, geringerem Zeitaufwand und weniger Gefahren für das Personal aus den Regalen entnommen und in diese wieder eingelegt werden.

Zum Entnehmen eines Trägerelementes aus einem Regal wird die Be- bzw. Entladevorrichtung vor dem Trägerelement positioniert, und das Auflageelement der zweiten Aufnahmevorrichtung wird in seiner Verfahrrichtung zu einem zu entnehmenden Trägerelement hin ausgefahren, so dass das Auflageelement das Trägerelement aufnehmen kann. Durch anschließendes Einfahren des Auflageelements wird das Trägerelement aus seinem Regalfach herausgezogen. In Verbindung mit dem Verschiebe- und Hebeapparat wird die Be- bzw. Entladevorrichtung dann im Fall, dass das Trägerelement aus einer Höhe über dem Boden des Regallagers entnommen wird, mit dem Trägerelement abgesenkt. Alle vorstehend genannten Vorgänge bedürfen keines Eingriffes von Hand. Das Einlegen eines Trägerelements in ein Regalfach erfolgt in umgekehrter Folge ebenfalls automatisiert.

Die zweite Aufnahmevorrichtung stellt darüber hinaus eine konstruktiv einfache und kostengünstige Maßnahme dar, eine bereits vorhandene Be- bzw. Entladevorrichtung durch Verbindung der zweiten Aufnahmevorrichtung mit der ersten Aufnahmevorrichtung in ihrer Funktionalität so zu erweitern, dass mit der Vorrichtung auch die Trägerelemente entnommen bzw. eingelegt werden können. Daher ist erfindungsgemäß auch vorgesehen, dass die zweite Aufnahmevorrichtung mit der ersten Aufnahmevorrichtung verbindbar ist, bzw. mit anderen Worten von dieser abgenommen werden kann. Somit ist es möglich, die Belade- bzw. Entladevorrichtung im Bedarfsfall durch einfaches Anbringen der zweiten Aufnahmevorrichtung an der ersten Aufnahmevorrichtung zum Entnehmen bzw. Einlegen von Trägerelementen zu erweitern. Auch der Rückbau der Belade- bzw. Entladevorrichtung zum Zwecke des Be- bzw. Entladens von Lebensmitteln ist entsprechend ohne größeren Zeit- und Kostenaufwand möglich.

Die erfindungsgemäße Belade- bzw. Entladevorrichtung sowie der erfindungsgemäße Verschiebe- und Hebeapparat, der diese Vorrichtung aufweist, werden bevorzugt in Käselagern verwendet, ohne auf diese Verwendung beschränkt zu sein.

Die erste Aufnahmevorrichtung ist entlang der Verfahrrichtung ein- und ausfahrbar, und der Antrieb für das Auflageelement ist durch die Verbindung der zweiten Aufnahmevorrichtung mit der ersten Aufnahmevorrichtung realisiert.

Somit wird das Auflageelement ein- bzw. ausgefahren, wenn die erste Aufnahmevorrichtung ein- bzw. ausgefahren wird. Dies ist vorteilhaft, da das Auflageelement keinen eigenen Antrieb zum Ein- und Ausfahren benötigt, sondern der Antrieb für das Ein- und Ausfahren der ersten Aufnahmevorrichtung auch als Antrieb für das Auflageelement genutzt wird. Hierdurch kann die zweite Aufnahmevorrichtung noch kostengünstiger hergestellt werden.

In einer bevorzugten Ausgestaltung ist das Auflageelement quer zur Verfahrrichtung relativ zur ersten Aufnahmevorrichtung begrenzt frei beweglich.

Durch diese Maßnahme ist das Auflageelement, selbst wenn der Verschiebe- und Hebeapparat nicht exakt in einer Sollposition vor einem Regalfach steht, dennoch relativ zu den Trägerelementen exakt positionierbar, so dass eine störungsfreie Entnahme bzw. ein störungsfreies Einlegen des Trägerelements gewährleistet ist. Auf diese Weise kann das Auflageelement möglichst mittig zu dem zu entnehmenden Trägerelement positioniert werden. Eine mittige Positionierung des Auflageelements relativ zum Trägerelement ist vorteilhaft, da hierdurch ein unerwünschtes Verkippen des Trägerelements auf dem Auflageelement verhindert wird.

In einer weiteren bevorzugten Ausgestaltung ist das Auflageelement mit der ersten Aufnahmevorrichtung durch zumindest eine Gelenkstange verbunden bzw. verbindbar.

Insbesondere im Zusammenhang mit der oben beschriebenen Maßnahme, wonach der Antrieb der ersten Aufnahmevorrichtung als Antrieb für das Auflageelement genutzt wird, wird über die Gelenkstangen eine Einfahrbewegung der ersten Aufnahmevorrichtung in eine Einfahrbewegung des Auflageelements umgesetzt, und entsprechend wird eine Ausfahrbewegung der ersten Aufnahmevorrichtung in eine Ausfahrbewegung des Auflageelements umgesetzt. "Gelenkstange" bedeutet hier eine Stange, die gelenkig an der ersten Aufnahmevorrichtung und/oder gelenkig am Auflageelement befestigt.

Entsprechend ist es bevorzugt, wenn die Gelenkstangen eine Bewegung des Auflageelements quer zur Verfahrrichtung ermöglichen.

Diese Maßnahme gewährleistet die begrenzte Beweglichkeit des Auflageelements relativ zu der ersten Aufnahmevorrichtung und ermöglicht somit vorteilhaft die oben bereits erwähnte Lagejustierung des Auflageelements relativ zu einem zu entnehmenden Trägerelement.

In einer weiteren bevorzugten Ausgestaltung ist das Auflageelement an zumindest einem langerstreckten Schlitten befestigt, der beim Ein- und Ausfahren in zumindest einer feststehenden Führung geführt ist.

Diese Maßnahme hat zum einen den Vorteil, dass über die langerstreckten Schlitten das Auflageelement mit einem großen Hub ein- und ausfahrbar ist, so dass das Auflageelement tief in ein Regalfach hineingefahren werden kann, was beispielsweise erforderlich ist, wenn in einem tiefen Regalfach zwei Trägerelemente hintereinander angeordnet sind. Zum anderen hat diese Maßnahme den Vorteil, dass eine geradlinige Ein- und Ausfahrbewegung des Auflageelements durch die Führung des Schlittens über einen großen Hub in kontrollierter Weise gewährleistet ist.

Vorzugsweise ist beidseits des Auflageelements jeweils ein Schlitten mit einer entsprechenden Führung vorhanden.

In einer weiteren bevorzugten Ausgestaltung nimmt das Auflageelement im ausgefahrenen Zustand eine im Wesentlichen horizontale Position und im eingefahrenen Zustand eine im Wesentlichen vertikale Position ein.

Bei der Entnahme eines Trägerelements aus einem Regal fährt das Auflageelement in im Wesentlichen horizontaler Position unter das Trägerelement aus, nimmt es auf und zieht das Trägerelement aus dem Regal beim wieder Einfahren heraus, wobei das Auflageelement im Laufe der Einfahrbewegung die im Wesentlichen vertikale Position einnimmt, so dass auch das Trägerelement im Wesentlichen vertikal aufgestellt wird. Der Übergang von der im Wesentlichen horizontalen Position in die im Wesentlichen vertikale Position ist vorzugsweise fließend. Unter einer im Wesentlichen horizontalen Position ist hier eine liegende Position des Auflageelements zu verstehen. Dies kann genau horizontal, aber auch etwas (bis +- 30°) zur Horizontalen geneigt sein. Unter einer im Wesentlichen vertikalen Position ist hier eine aufgestellte bzw. aufgerichtete Position des Auflageelementes zu verstehen. Diese kann genau vertikal, zur Vertikalen aber auch etwas (bis +- 45°) geneigt sein. Das Aufrichten bzw. Aufstellen des Auflageelementes beim

Übergang von dem ausgefahrenen Zustand in den eingefahrenen Zustand endet beispielsweise 10° bis 45° vor der Vertikalen.

Der Übergang von der im Wesentlichen horizontalen in die im Wesentlichen vertikale Position (und umgekehrt) hat zum einen den Vorteil einer Platzersparnis in engen Regalgängen beim Herausbefördern entnommener Trägerelemente aus den Regalgängen bzw. beim Hineinbefördern wieder einzulegender Trägerelemente in die Regalgänge mittels des Verschiebe- und Hebeapparats. Zum anderen besteht ein Vorteil dieser Maßnahme darin, dass die Trägerelemente beim Entnehmen aus den Regalen bzw. beim Einlegen in die Regale durch die Verschwenkung um ihre Längsachse weniger zu einem Verklemmen in den Regalfächern neigen.

Zudem ist hierbei vorteilhaft, dass das Trägerelement in der aufgerichteten Position des Auflageelements durch eine Person handhabungsfreundlich auf dieses aufgesetzt bzw. von diesem abgehoben werden kann.

In einer weiteren bevorzugten Ausgestaltung ist ein beim Einfahren nacheilendes Ende des Auflageelements mit dem zumindest einen Schlitten gelenkig verbunden, und ein beim Einfahren vorauseilendes Ende des Auflageelements ist von dem zumindest einen Schlitten weg bewegbar, und die zweite Aufnahmevorrichtung weist eine von dem zumindest einen Schlitten weg gekrümmte Schiene aufweist, auf die das vorauseilende Ende des Auflageelements beim Einfahren aufläuft, wodurch das Auflageelement von der im Wesentlichen horizontalen Position in die im Wesentlichen vertikale Position verschwenkt.

Diese Ausgestaltung stellt eine konstruktiv vorteilhaft einfache und fließend arbeitende Steuerung für den Übergang des Auflageelements von der im Wesentlichen horizontalen Position in die im Wesentlichen vertikale Position und umgekehrt dar. Diese Steuerung arbeitet somit in der Art einer Zwangssteuerung, die eine Schwenkbewegung des Auflageelements aus der Ein- und Ausfahrbewegung des Auflageelements ableitet, was den Vorteil hat, dass ein zusätzlicher Antrieb für die Schwenkbewegung des Auflageelements nicht erforderlich ist.

Vorzugsweise weist das beim Einfahren vorauseilende Ende des Auflageelements zumindest ein Lauforgan, vorzugsweise zumindest eine Rolle, auf, die entlang der gekrümmten Schiene geführt ist.

Diese Maßnahme hat den Vorteil, dass das Auflaufen des vorauseilenden Endes auf die gekrümmte Schiene wenig reibungsbehaftet ist und ein störungsfreier Bewegungsablauf gewährleistet werden kann.

In einer weiteren bevorzugten Ausgestaltung weist das Auflageelement zumindest einen Greifer zum Greifen und Festlegen zumindest eines Trägerelements an dem Auflageelement auf.

Durch diese Ausgestaltung kann sichergestellt werden, dass das Trägerelement beim Entnehmen bzw. Einlegen aus den Regalen bzw. in die Regale nicht verrutscht oder gar vom Auflageelement herunter fällt. Das Festlegen des Trägerelements am Auflageelement ist insbesondere in Verbindung mit der zuvor genannten Maßnahme des Aufstellens des Trägerelements in eine im Wesentlichen vertikale Position vorteilhaft, da hierbei die Gefahr besteht, dass sich das Trägerelement vom Auflageelement löst und herunterfällt. Diese Gefahr wird durch den zumindest einen Greifer vermieden. Es können am Auflageelement mehrere solche Greifer vorhanden sein. Das Öffnen und Schließen des oder der Greifer ist vorzugsweise motorisch aktuiert.

In einer weiteren bevorzugten Ausgestaltung weist die zweite Aufnahmevorrichtung eine Zentriervorrichtung zur Zentrierung der zweiten Aufnahmevorrichtung relativ zu einem einzelnen Regalfach der Regale in Richtung quer zur Verfahrrichtung des Auflageelements auf.

Durch diese Ausgestaltung ist sichergestellt, dass die zweite Aufnahmevorrichtung mittels der Zentriervorrichtung in Richtung quer zur Verfahrrichtung, d.h. in Längsrichtung der Regale, zwischen zwei Regalwänden oder -pfosten für den Vorgang des Entnehmens bzw. Einlegens eines Trägerelements optimal positioniert werden kann. Durch eine optimale Positionierung der zweiten Aufnahmevorrichtung können die Trägerelemente mittig aufgenommen werden, wodurch Kippmomente des Trägerelements auf dem Auflageelement weitestgehend vermieden werden.

In einer weiteren bevorzugten Ausgestaltung weist die Zentriervorrichtung eine erste Stange und eine zweite Stange auf, die sich im Wesentlichen symmetrisch beidseits des Auflageelements quer zur Verfahrrichtung erstrecken.

Diese Ausgestaltung der Zentriervorrichtung ist konstruktiv vorteilhaft einfach. Das Auflageelement befindet sich dabei vorzugsweise mittig zwischen den beiden Stangen.

Dabei ist ein Abstand zwischen einem äußeren Längsende der ersten Stange und einem äußeren Längsende der zweiten Stange vorzugsweise einstellbar ist.

Hierbei ist von Vorteil, dass die Zentriervorrichtung auf verschiedene Regalfachbreiten angepasst werden kann, wodurch die zweite Aufnahmevorrichtung universell für unterschiedliche Regale verwendbar ist.

Vorzugsweise können die Stangen in Form einer Teleskopstange ausgebildet sein.

In dieser Ausgestaltung kann somit die Längenanpassung der Zentriervorrichtung an die Regale konstruktiv und handhabungstechnisch besonders einfach realisiert werden.

Weiter vorzugsweise weist die Zentriervorrichtung an den Längsenden Anschläge auf, die zum Zentrieren der zweiten Aufnahmevorrichtung relativ zu dem einzelnen Regalfach jeweils um eine vertikale Achse verschwenkbar sind.

Vorzugsweise sind die Anschläge in Form von Platten, beispielsweise in L-Form ausgebildet, die eine erste Position einnehmen können, in der ihre flächige Seite in die Verfahrrichtung weist, und eine zweite Position, in der ihre flächige Seite quer zur Verfahrrichtung weist. In der ersten Position dienen die Anschläge zum Positionieren der zweiten Aufnahmevorrichtung in der Verfahrrichtung des Auflageelements, und in der zweiten Position quer zur Verfahrrichtung, d.h. in Längsrichtung der Regale. Die vertikale Kante dient als Anschlag beim Einlegen eines Trägerelements. Das Umklappen der Anschläge ist vorzugsweise aktuiert, beispielsweise pneumatisch, hydraulisch oder elektrisch.

Eine L-Form der Platten hat den Vorteil, dass der horizontal verlaufende Teil des "L" sowohl bei der Zentrierung an den Regalen als auch beim Entnehmen bzw. Einlegen der Trägerelemente aus den Regalen bzw. in die Regale unter die Trägerelemente schwenkbar ist, wodurch eine sichere Ausrichtung der zweiten Aufnahmevorrichtung relativ zu den Trägerelementen bewirkt wird.

Weitere Merkmale ergeben sich aus der nachfolgenden Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Fig. 1: eine Belade- bzw. Entladevorrichtung in perspektivischer Ansicht mit einer ersten und einer zweiten Aufnahmevorrichtung;
- Fig. 2: die zweite Aufnahmevorrichtung aus Fig. 1 in Alleinstellung;
- Fig. 3: einen Ausschnitt der Belade- bzw. Entladevorrichtung aus Fig. 1 in zwei verschiedenen Betriebsstellungen;
- Fig. 3a: einen Anschlag einer Zentriervorrichtung der zweiten Aufnahmevorrichtung in einer ersten Stellung;
- Fig. 3b: den Anschlag in Fig. 3a in einer zweiten Stellung; und
- Fig. 4: einen Verschiebe- und Hebeapparat in perspektivischer Ansicht mit einer Belade- bzw. Entladevorrichtung aus Fig. 1 in einer beispielhaften Benutzungsart in einem Regallager.

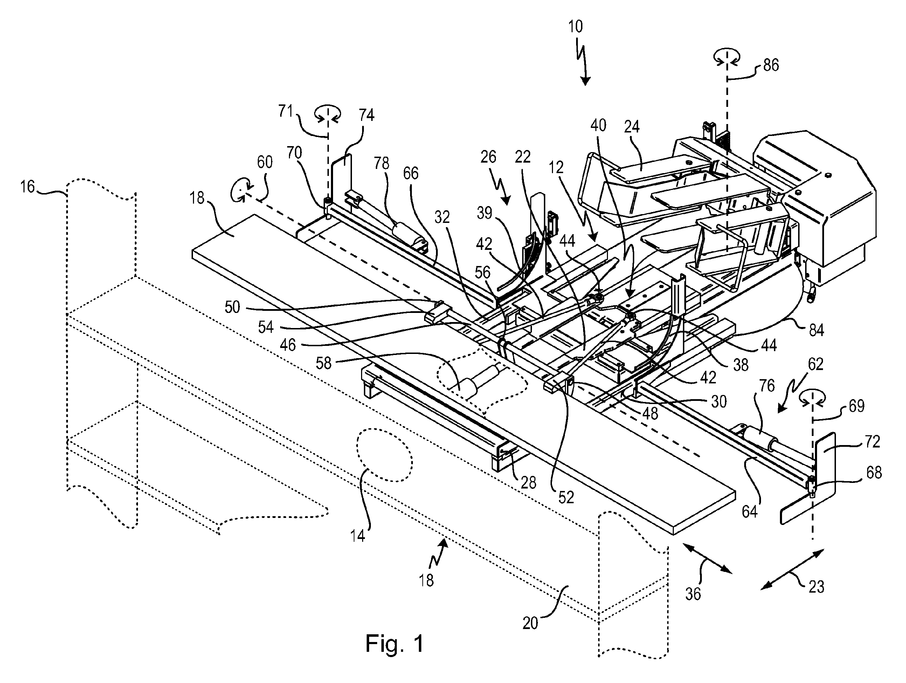

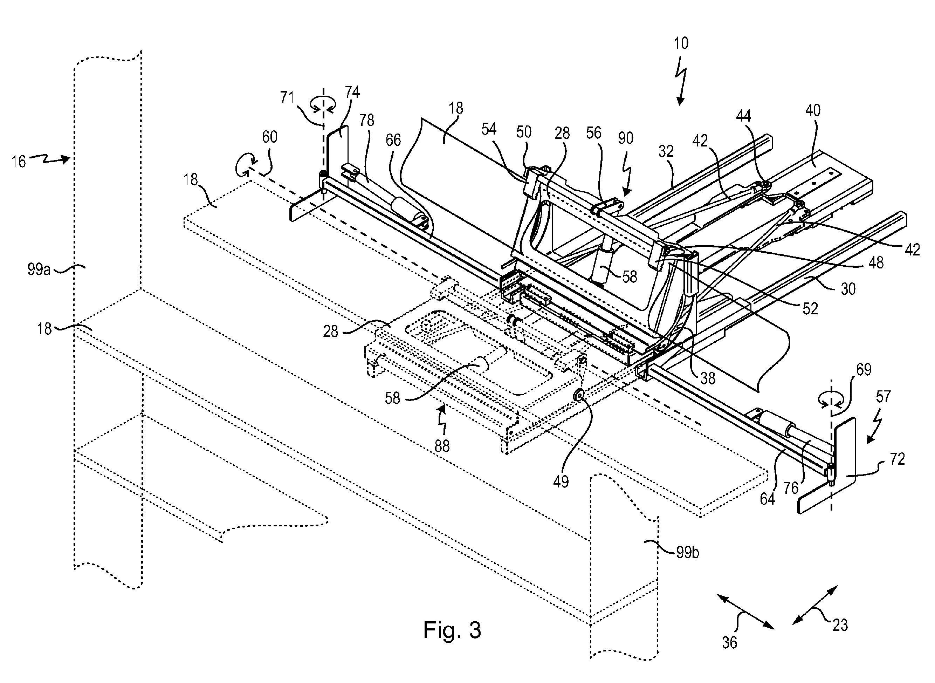

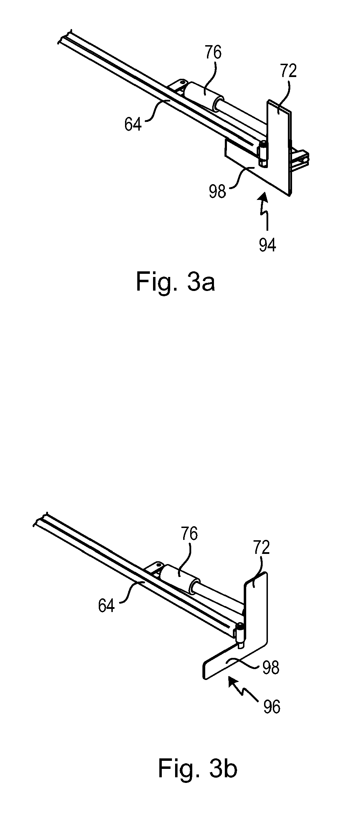

In Fig. 1 und 3 ist eine mit dem allgemeinen Bezugszeichen 10 versehene Belade- bzw. Entladevorrichtung zum Be- bzw. Entladen von Lebensmitteln gezeigt. Die Belade- bzw. Entladevorrichtung 10 weist eine erste Aufnahmevorrichtung 12 zur Aufnahme von Ladegut 14 auf. Das Ladegut 14 ist in Regalen 16 auf Trägerelementen 18 gelagert. Die Trägerelemente 18 sind typischerweise in Form von Regalbrettern 20 ausgeführt. Die erste Aufnahmevorrichtung 12 ist dazu vorgesehen, auf die Regalbretter 20 bewegt zu werden, um das Ladegut 14 von den Regalbrettern 20 zu entnehmen bzw. um das Ladegut auf die Regalbretter 20 abzulegen.

Hierzu weist die erste Aufnahmevorrichtung 12 Aufnahmezungen 22 auf, die zwischen das Ladegut 14 und das Regalbrett 20, auf dem das Ladegut 14 abgelegt ist, eingeschoben werden, um das Ladegut 14 von dem Regalbrett zu entnehmen bzw. um das Ladegut 14 auf das Regalbrett 20 abzulegen. Die erste Aufnahmevorrichtung 12 ist somit in einer Verfahrrichtung gemäß eines Doppelpfeiles 23 ein- und ausfahrbar.

Es versteht sich, dass die Aufnahmezungen 22 auch in Form eines Greifers ausgebildet sein können, die das Ladegut 14 zum Be- bzw. Entladen greifen oder in einer sonstigen beliebigen Weise zum Be- bzw. Entladen aufnehmen können.

Optional weist die Belade- bzw. Entladevorrichtung 10 zum Be- bzw. Entladen von Lebensmitteln eine Wendevorrichtung 24 auf, die zum Wenden des von den Regalbrettern 20 entnommenen Ladeguts 14 vorgesehen ist.

Die Belade- bzw. Entladevorrichtung 10 weist zudem eine zweite Aufnahmevorrichtung 26 auf, die zum Entnehmen bzw. Ablegen der Regalbretter 20 aus den Regalen 16 bzw. in die Regale 16 an der Belade- bzw. Entladevorrichtung 10 anbringbar ist, genauer gesagt mit der ersten Aufnahmevorrichtung 12 verbindbar oder wie in Fig. 1 gezeigt verbunden ist.

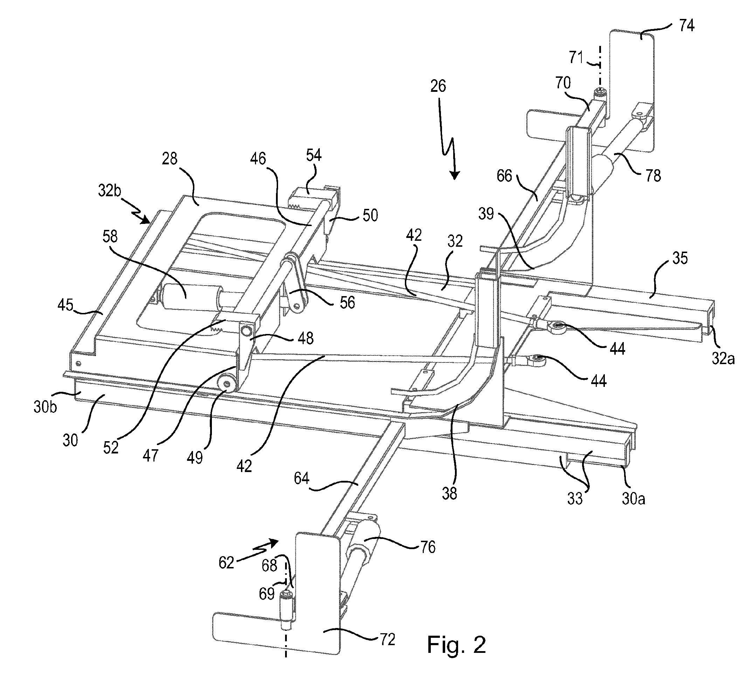

Fig. 2 zeigt die zweite Aufnahmevorrichtung 26 im von der ersten Aufnahmevorrichtung 12 abgenommenen Zustand in Alleinstellung und gegenüber Fig. 1 vergrößert.

Die zweite Aufnahmevorrichtung 26 weist ein Auflageelement 28 auf, auf dem die Regalbretter 20 zum Entnehmen bzw. Einlegen aus den Regalen 16 bzw. in die Regale 16 aufliegen. Das Auflageelement ist in Form eines Tisches ausgebildet.

Das Auflageelement 28 ist an langerstreckten Schlitten 30, 32 befestigt, die ein Ende 30a und 30b bzw. 32a und 32b aufweisen. Die Schlitten 30, 32 sind in feststehenden Führungen 33 und 35 geführt. Das Auflageelement 28 ist zusammen mit den Schlitten 30, 32 in der Verfahrrichtung 23 ein- und ausfahrbar, während die Führungen 33 und 35 dabei feststehen, d.h. nicht mit verfahren werden.

Die Verfahrrichtung 23 verläuft senkrecht zu einer Längsrichtung 36, entlang der sich die Trägerelemente 18 mit ihrer langen Seite erstrecken.

Die Führungen 33 und 35 weisen jeweils eine von dem jeweiligen Schlitten 30, 32 weg nach oben gekrümmte Schiene 38 bzw. 39 auf, auf die das Auflageelement 28 beim Einfahren aufläuft, wie später noch beschrieben wird.

Das Ein- und Ausfahren des Auflageelements 28 wird durch einen Antrieb 40 bewirkt (vergleiche Fig. 3). Vorliegend ist der Antrieb 40 durch die Verbindung der zweiten Aufnahmevorrichtung 26 mit der ersten Aufnahmevorrichtung 12 realisiert. Dies bedeutet, dass das Auflageelement 28 dadurch ein- und ausgefahren wird, dass die ersten Aufnahmevorrichtung ein- und ausgefahren wird. Für die erste Aufnahmevorrichtung 12 ist ein eigener Antrieb (nicht dargestellt), beispielsweise ein Motor, zum Ein- und Ausfahren der Aufnahmezungen 22 vorhanden, der über die erste Aufnahmevorrichtung 12 als der Antrieb 40 zum Ein- und Ausfahren des Auflageelements 28 auf Letzteres wirkt.

Dazu ist das Auflageelement 28 mit der ersten Aufnahmevorrichtung 12 durch Gelenkstangen 42 verbunden, um Schub- bzw. Zugkräfte auf das Auflageelement 28 zu übertragen. Durch Verfahren der ersten Aufnahmevorrichtung 12 in der Verfahrrichtung 23 wird das Auflageelement 28 in der Verfahrrichtung 23 ebenfalls verfahren, wobei die Schlitten 30, 32 in den Führungen 33, 35 geführt sind.

Die Gelenkstangen 42 weisen an einem Ende Gelenkköpfe 44 zur Anbindung der Gelenkstangen an der ersten Aufnahmevorrichtung 12 auf (siehe Fig. 1), wobei die Gelenkstangen 42 mit ihrem anderen Ende an ein Ende 45 des Auflageelements 28 angelenkt sind (die Anlenkungsstellen sind in den Figuren durch das Auflageelement 28 verdeckt und daher nicht sichtbar).

Die Gelenkstangen 42 erlauben eine begrenzte freie Beweglichkeit der zweiten Aufnahmevorrichtung 26 relativ zur ersten Aufnahmevorrichtung 12 in horizontaler Richtung quer zur Verfahrrichtung 23.

Das Auflageelement 28 ist mit den Schlitten 30, 32 mit seinem beim Einfahren nacheilenden Ende 45 gelenkig verbunden, während ein beim Einfahren vorauseilendes Ende 47 von den Schlitten 30, 32 weg bewegbar ist. An dem Ende 47 sind außerdem Lauforgane, hier in Form von Rollen 49, angeordnet, die beim Einfahren des Auflageelements 28 auf die gekrümmten Schienen 38, 39 auflaufen.

Durch den Antrieb 40 wird das Auflageelement 28 in der Verfahrrichtung 23 verfahren, wobei das Auflageelement 28 beim Auflaufen auf die gekrümmten Schienen 38, 39 von einer im ausgefahrenen Zustand im Wesentlichen horizontalen Position (Fig. 1 und 2; in Fig. 3 mit unterbrochenen Linien gezeigt) in eine im eingefahrenen Zustand im Wesentlichen vertikale Position verschwenkt wird (Fig. 3). Durch die gekrümmte Form der Schienen 38, 39 ist der Übergang von der horizontalen Position in die vertikale Position kontinuierlich bzw. fließend.

Das Auflageelement 28 weist eine Welle 46 auf, die endseitig an einem Halter 48 und an einem Halter 50 drehbar gelagert ist. Die Halter 48, 50 sind jeweils am Auflageelement 28 festgelegt. Die Welle 46 trägt zwei Greifer 52, 54, die durch eine Drehung der Welle 46 im Uhrzeigersinn geöffnet und im Gegenuhrzeigersinn geschlossen werden. Es versteht sich, dass die Greifer 52, 54 an der Welle 46 verschiebbar sein können, so dass die Greifer 52, 54 an beliebiger Stelle entlang der Welle 46 angeordnet werden können.

An der Welle 46 greift über einen Hebel 56 ein Aktuator 58 an, der als elektrischer, hydraulischer oder pneumatischer Aktuator ausgebildet sein kann. Durch Aktivierung des Aktuators 58 wird die Welle 46 um ihre Drehachse 60 gedreht, wodurch die beiden Greifer 52, 54 ebenfalls um die Drehachse 60 drehen und sich entsprechend der Drehrichtung öffnen oder schließen. Mit den Greifern 52, 54 wird ein auf dem Auflageelement 28 aufgelegtes Regalbrett 20 gegriffen und am Auflageelement 28 festgelegt, wodurch ein Verrutschen oder gar ein Herunterfallen des Regalbretts 20 verhindert wird.

Die zweite Aufnahmevorrichtung 26 weist weiterhin eine Zentriervorrichtung 62 auf. Die Zentriervorrichtung 62 weist eine mit der Führung 33 verbundene erste Stange 64 und eine mit der Führung 35 verbundene zweite Stange 66 auf. Die Stangen 64, 66 fluchten miteinander und erstrecken sich beidseits des Auflageelements 28 symmetrisch zu diesem. Die Stangen 64, 66 verlaufen quer zur Verfahrrichtung 23 bzw. parallel zur Längsrichtung 36. Die erste Stange 64 weist ein erstes Längsende 68 und die zweite Stange 66 weist ein zweites Längsende 70 auf. Das erste Längsende 68 weist einen ersten Anschlag 72 und das zweite Längsende 70 weist einen zweiten Anschlag 74 auf, wobei die Anschläge 72, 74 um eine jeweilige vertikale Schwenkachse 69 bzw. 71 verschwenkbar an den Stangen 64, 66 festgelegt sind.

Die Anschläge 72, 74 sind jeweils als Platte in L-Form ausgebildet.

Der Abstand zwischen den Längsenden 68 und 70 bzw. zwischen den Anschlägen 72 und 74 ist einstellbar.

An der ersten Stange 64 ist ein Aktuator 76 und an der zweiten Stange 66 ist ein Aktuator 78 befestigt, wobei der Aktuator 76 auf den ersten Anschlag 72 zum Verschwenken desselben und der Aktuator 78 auf den zweiten Anschlag 74 zum Verschwenken desselben wirkt.

Die Aktuatoren 76, 78 können abhängig und/oder unabhängig voneinander betätigbar sein.

Die Belade- bzw. Entladevorrichtung 10 weist einen Drehtisch 84 auf, wodurch die gesamte Belade- bzw. Entladevorrichtung um eine im Wesentlichen vertikale Drehachse 86 drehbar ist.

Die Aktuatoren 58, 76, 78 können in Form von pneumatischen, hydraulischen oder elektrischen Betätigungselementen oder einer Kombination derartiger Betätigungselemente ausgebildet sein.

Wie bereits oben erwähnt, ist die zweite Aufnahmevorrichtung 26 mit der ersten Aufnahmevorrichtung 12 lösbar verbunden. Die lösbare Verbindung ist hierbei durch die Gelenkstangen 42 realisiert, die lösbar mit der ersten Aufnahmevorrichtung 12 im Bereich des in Ausfahrrichtung 23 gesehen hinteren Endes der Aufnahmezungen 22 verbunden werden. Durch die lösbare Verbindung kann die Belade- bzw. Entladevorrichtung sowohl zum Beladen bzw. Entladen von Lebensmitteln als auch zum Entnehmen bzw. Einlegen von Regalbrettern 20 genutzt werden kann.

In Fig. 3 ist ein Ausschnitt der Belade- bzw. Entladevorrichtung 10 aus Fig.1 dargestellt. Hierbei ist das Auflageelement 28 in unterbrochenen Linien in einer horizontalen Position 88 dargestellt.

Ausgehend von dieser horizontalen Position wird das Auflageelement 28 durch Einfahren des Auflageelements 28 mittels des Antriebs 40 in der Verfahrichtung 23 aufgrund der gekrümmten Schienen 38, 39 und der gelenkigen Verbindung des Auflageelements 28 mit den Schlitten 30, 32 in eine im Wesentlichen vertikale Position 90 verschwenkt, die in Figur 3 mit durchgezogenen Linien dargestellt ist.

Zur Entnehmen eines Regalbrettes 20 wird die die zweite Aufnahmevorrichtung 26 vor dem Regal 16, genauer gesagt vor dem entsprechenden Regalfach in Stellung gebracht. Die Anschläge 72, 74 befinden sich dabei zunächst in einer ersten Stellung, wie sie in Fig. 3a dargestellt ist.

Anschließend werden die Anschläge 72, 74 durch die Aktuatoren 76, 78 um 90° in eine zweite Stellung 96 gedreht, wie sie in Fig. 3 und Fig. 3b dargestellt ist. Hierdurch schwenkt ein jeweiliger horizontal verlaufender Teil 98 der L-förmigen Anschläge 72, 74 in das Regal 16 hinein und kommt dabei mit einer jeweiligen Seitenwand 99a, 99b in Anlage, wodurch die zweite Aufnahmevorrichtung 26 und insbesondere das Auflageelement 28 entlang der Längsrichtung 36 relativ zum Regal 16 ausgerichtet und relativ zum zu entnehmenden Trägerelement 18 zentriert wird. Die zweite Aufnahmevorrichtung 26 weist dazu in Längsrichtung 36, d.h. quer zur Verfahrrichtung eine begrenzte freie Beweglichkeit relativ zu ersten Aufnahmevorrichtung 12 auf.

Zum Entnehmen des Trägerelements 18 aus dem Regal 16 wird das Auflageelement 28 dann unter das Trägerelement 18 ausgefahren, bis das Trägerelement 18 auf dem Auflageelement 28 aufliegt. Anschließend wird das Trägerelement 18 mittels der Greifer 52, 54 gegriffen und auf dem Auflageelement 28 festgelegt. Schließlich wird das Trägerelement 18 in der Verfahrrichtung 23 aus dem Regal 16 herausgezogen. Während des Einfahrens des Auflageelements 28 wird das Trägerelement 18 durch die Schwenkbewegung des Auflageelements 28 in eine im Wesentlichen vertikale Position aufgestellt, wie in Fig. 3 mit durchgezogenen Linien dargestellt ist.

Es versteht sich, dass die Schwenkbewegung des Auflageelements 28 bereits einsetzen kann, während das Trägerelement 18 noch nicht vollständig aus dem Regal 16 herausgezogen ist, oder erst dann, wenn das Trägerelement 18 bereits vollständig herausgezogen ist. Dies hängt auch von der Tiefe des Regals ab und wie tief das Trägerelement 18 in dem Regal 16 angeordnet ist.

Wenn das Trägerelement 18 in einer Höhe über dem Boden des Regallagers entnommen wird, die außerhalb der Reichweite einer Person liegt, wird die Belade- und Entladevorrichtung samt der zweiten Aufnahmevorrichtung 26 zum Boden des Regallagers abgesenkt. Nach dem Öffnen der Greifer 52, 54 kann das Trägerelement 18 gefahrenfrei von Hand, aber auch automatisch, entnommen werden.

Zum Einlegen des Trägerelements 18 in das Regal 16 wird das Trägerelement 18 vorzugweise in der im Wesentlichen vertikalen Position 90 am Auflageelement 28 festgelegt. Die zweite Aufnahmevorrichtung 26 wird zu dem Regal 16 verbracht und analog zur Entnahme des Trägeelements 18 aus dem Regal 16 wie oben beschrieben vor einem Regalfach des Regals 16 positioniert und zentriert. Im Anschluss wird das Auflageelement 28 zum Einlegen des Trägerelements 18 in das Regalfach des Regals 16 hinein ausgefahren.

Nach Öffnen der Greifer 52, 54 wird das Auflageelement 28 wird das Auflageelement 28 aus dem Regal 16 herausgefahren, während das Trägerelement in dem Regal 16 verbleibt.

Während es vorgesehen ist, dass das Trägerelement 18 nach dem Entnehmen aus dem Regal 16 bzw. vor dem Einlegen in das Regal 16 von Hand auf das Auflageelement 28 aufgelegt oder von diesem entnommen wird, kann auch ein automatisiertes Auflegen bzw. Entnehmen des Regalbretts 20 auf das bzw. von dem Auflageelement 28 in Betracht gezogen werden.

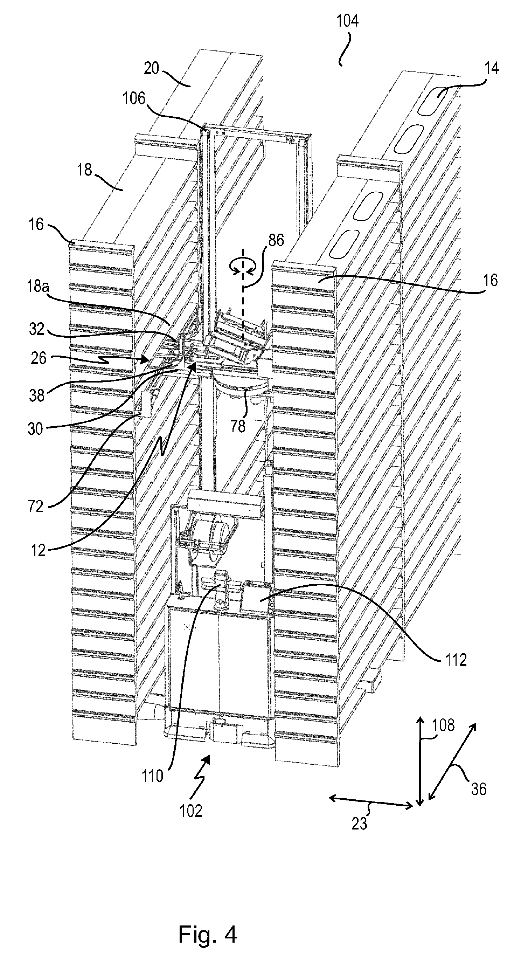

Fig. 4 zeigt einen Verschiebe- und Hebeapparat 102, der die Belade- und Entladevorrichtung 10 aufweist, in einem Regallager, das eine Mehrzahl an Regalen 16 mit einer Vielzahl an Trägerelementen 18 in Form von Regalbrettern 20 enthält. Der Verschiebe- und Hebeapparat 102 ist dazu ausgelegt, sich in Regalgängen 104 zwischen den Regalen 16 zu bewegen.

Die an dem Verschiebe- und Hebeapparat 102 befestigte Belade- bzw. Entladevorrichtung 10 weist die zweite Aufnahmevorrichtung 26 zum Entnehmen bzw. Einlegen der Trägerelemente 18 aus den Regalen 16 bzw. in die Regale 16 auf, wie oben beschrieben wurde.

In Fig. 4 ist gezeigt, wie mittels der zweiten Aufnahmevorrichtung 26 gerade ein Trägerelement 18a entnommen wird, wobei das Auflageelement bereits unter das Trägerelement 18a ausgefahren ist.

Anhand der Fig. 4 ist auch erkennbar, dass das oben beschriebene Verschwenken von Trägerelementen 18 aus einer im Wesentlichen horizontalen Position 88 in eine vertikale Position 90 beim Entnehmen oder Einlegen der Trägerelemente 18 vorteilhaft ist, da die Regalgängen 104 so schmal sein können, dass eine horizontale Beförderung der Trägerelemente 18 in den Regalgängen 104 nicht möglich ist. Die erfindungsgemäße Belade- und Entladevorrichtung 10 ermöglicht dagegen eine Verwendung auch in engen Regalgängen 104.

Der Verschiebe- und Hebeapparat 102 ist dazu ausgelegt, sich in der Längsrichtung 36 in den Regalgängen 104 zu bewegen. Der Verschiebe- und Hebeapparat 102 weist eine Hubeinheit 106 auf, die dazu ausgelegt ist, die Belade- bzw. Entladevorrichtung 10 in einer vertikalen Richtung 108, d.h. in der Höhe zu verfahren.

Mittels des oben genannten Drehtischs 84 kann die Belade- bzw. Entladevorrichtung 10 außerdem um die vertikale Drehachse 86 gedreht werden, um die Belade- bzw. Entladevorrichtung 10 in den Regalgängen zu den Regalen 16 hin zu verschwenken.

Die Belade- bzw. Entladevorrichtung 10 kann mittels des Verschiebe- und Hebeapparats somit an jedes Regalfach der Regale 16 herangefahren und positioniert werden, um Trägerelemente 18 aus den Regalen 16 zu entnehmen bzw. in die Regale 16 einzulegen, wie oben beschrieben wurde.

Der Verschiebe- und Hebeapparat 102 und die daran vorhandene Belade- bzw. Entladevorrichtung 10 ermöglicht ein automatisiertes Entnehmen bzw. Einlegen der Trägerelemente 18 aus den Regalen 16 bzw. in die Regale 16.

Am Verschiebe- und Hebeapparat 102 ist ferner ein Steuergriff 110 sowie eine Steuereinheit 112 zum Steuern des Verschiebe- und Hebeapparats 102 sowie der Belade- bzw. Entladevorrichtung 10 vorgesehen.

## Patentansprüche

1. Belade- bzw. Entladevorrichtung (10) zum Be- bzw. Entladen von Lebensmitteln für einen Verschiebe- und Hebeapparat (102), mit einer ersten Aufnahmevorrichtung (12), um Regale (16), die Trägerelemente (18) zum Ablegen von Ladegut (14) aufweisen, mit Ladegut (14) zu beladen bzw. das Ladegut (14) von den Regalen (16) zu entladen, und mit einer zweiten Aufnahmevorrichtung (26), die ein Auflageelement (28) zum Entnehmen bzw. Einlegen der Trägerelemente (18) aus den Regalen (16) bzw. in die Regale (16) aufweist, und mit einem Antrieb (40) zum Ein- und Ausfahren des Auflageelements (28) entlang einer Verfahrrichtung des Auflageelements (28), wobei die zweite Aufnahmevorrichtung (26) mit der ersten Aufnahmevorrichtung (12) verbunden oder verbindbar ist, **dadurch gekennzeichnet, dass** die erste Aufnahmevorrichtung (12) entlang der Verfahrrichtung ein- und ausfahrbar ist, und dass der Antrieb (40) für das Auflageelement (28) durch die Verbindung der zweiten Aufnahmevorrichtung (26) mit der ersten Aufnahmevorrichtung (12) realisiert ist.

2. Vorrichtung nach Anspruch 1, **dadurch gekennzeichnet, dass** das Auflageelement (28) quer zur Verfahrrichtung relativ zur ersten Aufnahmevorrichtung (12) begrenzt frei beweglich ist.

3. Vorrichtung nach Anspruch 1 oder 2, **dadurch gekennzeichnet, dass** das Auflageelement (28) mit der ersten Aufnahmevorrichtung (12) durch zumindest eine Gelenkstange (42) verbunden bzw. verbindbar ist.

4. Vorrichtung nach Anspruch 3, **dadurch gekennzeichnet, dass** die zumindest eine Gelenkstange (42) eine Bewegung des Auflageelements (28) quer zur Verfahrrichtung ermöglicht.

5. Vorrichtung nach einem der Ansprüche 1 bis 4, **dadurch gekennzeichnet, dass** das Auflageelement (28) an zumindest einem langerstreckten Schlitten (30, 32) befestigt ist, der beim Ein- und Ausfahren in zumindest einer feststehenden Führung (33, 35) geführt ist.

6. Vorrichtung nach Ansprüche 1 bis 5, **dadurch gekennzeichnet, dass** das Auflageelement (28) im ausgefahrenen Zustand eine im Wesentlichen horizontale Position (88) und im eingefahrenen Zustand eine im Wesentlichen vertikale Position (90) einnimmt.

7. Vorrichtung nach Anspruch 5 und 6, **dadurch gekennzeichnet, dass** ein beim Einfahren nacheilendes Ende des Auflageelements (28) mit dem zumindest einen Schlitten (30, 32) gelenkig verbunden ist, und dass ein beim Einfahren vorauseilendes Ende des Auflageelements (28) von dem zumindest einen Schlitten (30, 32) weg bewegbar ist, und dass die zweite Aufnahmevorrichtung (26) eine von dem zumindest einen Schlitten (30, 32) weg gekrümmte Schiene (38) aufweist, auf die das vorauseilende Ende des Auflageelements (28) beim Einfahren aufläuft, wodurch das Auflageelement (28) von der im Wesentlichen horizontalen Position (88) in die im Wesentlichen vertikale Position (90) verschwenkt.

8. Vorrichtung nach Anspruch 7, **dadurch gekennzeichnet, dass** das beim Einfahren vorauseilende Ende des Auflageelements zumindest ein Lauforgan, vorzugsweise zumindest eine Rolle (49), aufweist, das entlang der gekrümmten Schiene (38, 39) geführt ist.

9. Vorrichtung nach einem der Ansprüche 1 bis 8, **dadurch gekennzeichnet, dass** das Auflageelement (28) zumindest einen Greifer (52, 54) zum Greifen und Festlegen zumindest eines Trägerelements (18) an dem Auflageelement (28) aufweist.

10. Vorrichtung nach einem der Ansprüche 1 bis 9, **dadurch gekennzeichnet, dass** die zweite Aufnahmevorrichtung (26) eine Zentriervorrichtung (62) zur Zentrierung der zweiten Aufnahmevorrichtung (26) relativ zu einem einzelnen Regalfach der Regale (16) in Richtung quer zur Verfahrrichtung des Auflageelements aufweist.

11. Vorrichtung nach Anspruch 10, **dadurch gekennzeichnet, dass** die Zentriervorrichtung (62) eine erste Stange (64) und eine zweite Stange (66) aufweist, die sich im Wesentlichen symmetrisch beidseits des Auflageelements (28) quer zur Verfahrrichtung erstrecken.

12. Vorrichtung nach Anspruch 11, **dadurch gekennzeichnet, dass** ein Abstand zwischen einem äußeren Längsende (68) der ersten Stange (64) und einem äußeren Längsende (70) der zweiten Stange (66) einstellbar ist.

13. Vorrichtung nach Anspruch 12, **dadurch gekennzeichnet, dass** die Zentriervorrichtung (62) an den Längsenden (68, 70) Anschläge (72, 74) aufweist, die zum Zentrieren der zweiten Aufnahmevorrichtung (26) relativ zu dem einzelnen Regalfach jeweils um eine vertikale Achse (80, 82) verschwenkbar sind.

14. Verschiebe- und Hebeapparat (102) zum Be- bzw. Entladen von Regalen (16) mit Ladegut (14), der dazu geeignet ist, sich zwischen den Regalen (16) in Regalgängen (104) zu bewegen, **gekennzeichnet durch** eine Belade- und Entladevorrichtung (10) nach einem der vorhergehenden Ansprüche.

## Claims

1. Loading or unloading device (10) for loading or unloading of food for a shifting and lifting apparatus (102), comprising a first receiving device (12) to load shelves (16), which have rest elements (18) for depositing of load good (14), with load good (14) or to unload the load good (14) from the shelves (16), and a second receiving device (26), which has a supporting element (28) for taking out or putting in the rest elements (18) from or into the shelves (16), and a drive (40) for extending and retracting the supporting element (28) along a direction of displacement of the supporting element (28), wherein the second receiving device (26) is connected or connectable to the first receiving device (12), **characterized in that** first receiving device (12) is extendable and retractable along the direction of displacement, and that the drive (40) for the supporting element (28) is realized by the connection of the second receiving device (26) to the first receiving device (12).

2. Device according to claim 1, **characterized in that** the supporting element (28) is movable relative to the first receiving device (12) transversely to the direction of displacement and with limited free movability.

3. Device according to claim 1 or 2, **characterized in that** the supporting element (28) is connected or connectable to the first receiving device (12) by at least one articulated rod (42).

4. Device according to claim 3, **characterized in that** the at least one articulated rod (42) enables a movement of the supporting element (28) transversely to the direction of displacement.

5. Device according to any one of claims 1 to 4, **characterized in that** the supporting element (28) is attached on at least one elongated carriage (30, 32) which is guided in at least one fixed guide (33, 35) during retraction and extension.

6. Device according to claims 1 to 5, **characterized in that** the supporting element (28) assumes a substantially horizontal position (88) in the extended state and a substantially vertical position (90) in the retracted state.

7. Device according to claim 5 and 6, **characterized in that** an end of the supporting element (28), which end is a trailing end during retraction, is articulated to the at least one carriage (30, 32), and **in that** an end of the supporting element (28), which end is a leading end during retraction, is movable away from the at least one carriage (30, 32), and that the second receiving device (26) has a rail curved away from the at least one carriage (30, 32), onto which the leading end of the supporting element (28) runs up during retraction, whereby the supporting element (28) is pivoted from the substantially horizontal position (88) pivoted to the substantially vertical position (90).

8. Device according to claim 7, **characterized in that** the end of the supporting element, which end is the leading end during retraction, has at least one running member, preferably at least one roller (49), which is guided along the curved rail (38, 39).

9. Device according to any one of claims 1 to 8, **characterized in that** the supporting element (28) has at least one gripper (52, 54) for gripping and securing at least one rest element (18) on the supporting element (28).

10. Device according to any one of claims 1 to 9, **characterized in that** the second receiving device (26) has a centering device (62) for centering the second receiving device (26) relative to a single shelf compartment of the shelves (16) transversely to the direction of displacement of the supporting element.

11. Device according to claim 10, **characterized in that** the centering device (62) has a first rod (64) and a second rod (66) which extend substantially symmetrically on both sides of the supporting element (28) and transversely to the direction of displacement.

12. Device according to claim 11, **characterized in that** a distance between an outer longitudinal end (68) of the first rod (64) and an outer longitudinal end (70) of the second rod (66) is adjustable.

13. Device according to claim 12, **characterized in that** the centering device (62) has stops (72, 74) at the longitudinal ends (68, 70) which, for centering the second receiving device (26) relative to the single shelf compartment, are respectively pivotable about a vertical axis (80 , 82).

14. Shifting and lifting apparatus (102) for loading or unloading of shelves (16) with load good (14), which is adapted to move between the shelves (16) in shelf corridors (104), **characterized by** a loading and unloading device (10) according to any one of the preceding claims.

## Revendications

1. Dispositif de chargement ou de déchargement (10) pour le chargement ou le déchargement de produits alimentaires pour un appareil de déplacement et de levage (102) avec un premier dispositif de logement (12) afin de charger des étagères (16) qui présentent des éléments porteurs (18) destinés au dépôt du produit de chargement (14), avec un produit de chargement (14) ou afin de décharger le produit de chargement (14) des étagères (16), et avec un second dispositif de logement (26) qui présente un élément d'appui (28) destiné au retrait ou à l'insertion des éléments porteurs (18) des étagères (16) ou dans les étagères (16), et avec un entraînement (40) destiné à l'entrée et à la sortie de l'élément d'appui (28) le long d'un sens de déplacement de l'élément d'appui (28), le second dispositif de logement (26) étant ou pouvant être relié au premier dispositif de logement (12), **caractérisé en ce que** le premier dispositif de logement (12) peut être entré et sorti le long du sens de déplacement et **en ce que** l'entraînement (40) pour l'élément d'appui (28) est réalisé par la liaison du second dispositif de logement (26) avec le premier dispositif de logement (12).

2. Dispositif selon la revendication 1, **caractérisé en ce que** l'élément d'appui (28) peut se déplacer librement de manière limitée transversalement au sens de déplacement par rapport au premier dispositif de logement (12).

3. Dispositif selon la revendication 1 ou 2, **caractérisé en ce que** l'élément d'appui (28) est ou peut être relié au premier dispositif de logement (12) par au moins une tige d'articulation (42).

4. Dispositif selon la revendication 3, **caractérisé en ce que** l'au moins une tige d'articulation (42) permet un mouvement de l'élément d'appui (28) transversalement au sens de déplacement.

5. Dispositif selon l'une quelconque des revendications 1 à 4, **caractérisé en ce que** l'élément d'appui (28) est fixé sur au moins un chariot (30, 32) étiré en longueur qui est guidé lors de l'entrée et de la sortie dans au moins un guidage fixe (33, 35).

6. Dispositif selon les revendications 1 à 5, **caractérisé en ce que** l'élément d'appui (28) dans l'état sorti occupe une position sensiblement horizontale (88) et dans l'état entré une position (90) sensiblement verticale.

7. Dispositif selon les revendications 5 et 6, **caractérisé en ce qu'**une extrémité en arrière lors de l'entrée de l'élément d'appui (28) est reliée par articulation à l'au moins un chariot (30, 32) et **en ce qu'**une extrémité en avant lors de l'entrée de l'élément d'appui (28) peut être déplacée loin de l'au moins un chariot (30, 32), et **en ce que** le second dispositif de logement (26) présente un rail (38) courbé loin de l'au moins un chariot (30, 32), sur lequel l'extrémité en avant de l'élément d'appui (28) monte lors de l'entrée, par quoi l'élément d'appui (28) pivote de la position (88) sensiblement horizontale dans la position sensiblement verticale (90).

8. Dispositif selon la revendication 7, **caractérisé en ce que** l'extrémité en avant lors de l'entrée de l'élément d'appui présente au moins un organe de roulement, de préférence au moins un rouleau (49) qui est guidé le long du rail courbé (38, 39).

9. Dispositif selon l'une quelconque des revendications 1 à 8, **caractérisé en ce que** l'élément d'appui (28) présente au moins une pince (52, 54) pour la préhension et la fixation au moins d'un élément porteur (18) sur l'élément d'appui (28).

10. Dispositif selon l'une quelconque des revendications 1 à 9, **caractérisé en ce que** le second dispositif de logement (26) présente un dispositif de centrage (62) pour le centrage du second dispositif de logement (26) par rapport à une case individuelle des étagères (16) en direction transversale au sens de déplacement de l'élément d'appui.

11. Dispositif selon la revendication 10, **caractérisé en ce que** le dispositif de centrage (62) présente une première tige (64) et une seconde tige (66) qui s'étendent sensiblement symétriquement de part et d'autre de l'élément d'appui (28) transversalement au sens de déplacement.

12. Dispositif selon la revendication 11, **caractérisé en ce qu'**une distance entre une extrémité longitudinale extérieure (68) de la première tige (64) et une extrémité longitudinale extérieure (70) de la seconde tige (68) peut être réglée.

13. Dispositif selon la revendication 12, **caractérisé en ce que** le dispositif de centrage (62) présente, sur les extrémités longitudinales (68, 70), des butées (72, 74) qui peuvent être pivotées pour le centrage du second dispositif de logement (26) par rapport à la case d'étagère individuelle respectivement autour d'un axe vertical (80, 82).

14. Appareil de déplacement et de levage (102) pour le chargement ou le déchargement d'étagères (16) avec un produit de chargement (14) qui est approprié afin de se déplacer entre les étagères (16) dans des couloirs de rayonnage (104), **caractérisé par** un dispositif de chargement et de déchargement (10) selon l'une quelconque des revendications précédentes.
